# EUROPEAN PATENT APPLICATION

(11) **EP 4 848 346 A1**
(43) Date of publication of application: **02.12.2026**
(21) Application number: 26181789.4
(22) Date of filing: 28.05.2026
(51) Int. Cl.: H01M 4/04, H01M 4/62

(54) **POWDER FOR DRY ELECTRODE, METHOD OF PREPARING THE SAME, DRY ELECTRODE SHEET AND SECONDARY BATTERY**

(30) Priority: 29.05.2025 KR 20250070537
(71) Applicant: SK On Co., Ltd., Seoul 03161 (KR)
(72) Inventor: PARK, Sung Jun, 34124 Daejeon (KR); KIM, Young Jun, 34124 Daejeon (KR); OH, Seung Hyeon, 34124 Daejeon (KR); LEE, Kyu Sik, 34124 Daejeon (KR); JO, Seung Yeon, 34124 Daejeon (KR); HWANG, Hye Won, 34124 Daejeon (KR)
(74) Representative: Stolmár & Partner Patentanwälte PartG mbB

(57) **Abstract**

A powder for a dry electrode, a method of preparing the powder, a dry electrode sheet, and a secondary battery are provided. The powder for a dry electrode includes an electrode active material, a binder, and a conductive material. A dynamic angle of repose of the powder measured at 30 rpm is in a range from 15° to 30°. The dry electrode sheet is fabricated using the powder with improved processibility and has reduced thickness variation.

## Description

### BACKGROUND

### TECHNICAL FIELD

Embodiments of the present disclosure relate to a powder for a dry electrode, a method of preparing the same, a dry electrode sheet, and a secondary battery. More particularly, embodiments of the present disclosure relate to a powder for a dry electrode comprising an electrode active material, a method of preparing the same, a dry electrode sheet, and a secondary battery.

### TECHNICAL CONSIDERATIONS

A secondary battery which can be charged and discharged repeatedly has been widely employed as a power source of a mobile electronic device such as a camcorder, a mobile phone, a laptop computer, etc., according to developments of information and display technologies. Examples of the secondary battery include a lithium secondary battery, a sodium secondary battery, a potassium secondary battery, a nickel-cadmium battery, a nickel-hydrogen battery, etc. The lithium secondary battery among the secondary batteries is being actively developed due to high operational voltage and energy density per unit weight, a high charging rate, a compact dimension, etc.

For example, the lithium secondary battery may include an electrode assembly including an electrode (a cathode and an anode) and a separator, and an electrolyte solution impregnating the electrode assembly. The lithium secondary battery may further include an outer packaging material, e.g., a pouch-shaped packaging material, that accommodates the electrode assembly and the electrolyte solution.

The electrode may include an electrode current collector and an electrode active material layer formed on the electrode current collector. The electrode active material layer may be formed by a wet method. For example, an electrode active material may be dispersed in a solvent to prepare a slurry, and the electrode active material layer may be formed by coating, drying, and pressing the slurry on the electrode current collector.

In the wet method described above, time and energy consumption during the drying process may be increased, and additional costs and equipment are required for a solvent treatment. Further, electrode quality may be deteriorated due to particle floating caused by a difference in solvent evaporation rate during the drying process.

The electrode active material layer may be prepared by a dry method that does not employ solvents. However, due to the absence of the solvent, the electrode manufacturing process may not be easily controlled.

### SUMMARY

According to some non-limiting aspects of the present disclosure, there is provided a powder for a dry electrode providing improved process reliability.

According to some non-limiting aspects of the present disclosure, there is provided a dry electrode sheet and a secondary battery comprising the powder disclosed herein for a dry electrode.

According to some non-limiting embodiments of the present disclosure, a powder for a dry electrode comprises an electrode active material, a binder, and a conductive material, wherein a dynamic angle of repose of the powder measured at 30 rpm in a range from 15° to 30°.

In some non-limiting embodiments, a dynamic angle of repose of the powder, measured at 60 rpm, may be in a range from 5° to 15°.

In some non-limiting embodiments, a ratio of a dynamic angle of repose of the powder measured at 60 rpm to the dynamic angle of repose of the powder measured at 30 rpm for the powder may be 1/2 or less.

In some non-limiting embodiments, a standard deviation of a thickness of an electrode sheet manufactured from the powder may be 3 µm or less.

In some non-limiting embodiments, the dynamic angle of repose of the powder may be calculated by placing the powder for a dry electrode into an interior of a cylindrical drum having a circular base in a horizontal position, and measuring an angle which a top surface of the powder within the cylindrical drum forms with a circular side surface of the interior of the cylindrical drum while rotating the cylindrical drum at a predetermined rpm.

In some non-limiting embodiments, the electrode active material may comprise a lithium metal oxide.

In some non-limiting embodiments, the electrode active material may comprise at least one of a carbon-based active material and/or a silicon-based active material.

In some non-limiting embodiments, the binder may comprise a material capable of being fiberized by heat and/or shear force.

In some non-limiting embodiments, the binder may comprise at least one selected from the group consisting of polytetrafluoroethylene, polyethylene, polyvinylidene fluoride, polyvinylidene fluoride-hexafluoropropylene copolymer, carboxymethyl cellulose, and a mixture thereof.

In some non-limiting embodiments, the conductive material may comprise at least one of a carbon-based conductive material and/or a metal-based conductive material.

According to some non-limiting embodiments of the present disclosure, a dry electrode sheet comprises the powder for a dry electrode.

According to some non-limiting embodiments of the present disclosure, a secondary battery comprises a cathode comprising the dry electrode sheet, and an anode opposing the cathode.

According to some non-limiting embodiments of the present disclosure, a method for preparing a powder for a dry electrode comprises preparing a preliminary powder comprising a binder, an electrode active material, and a conductive material; stirring the preliminary powder at a temperature of 40 °C or higher to form a mixed powder; and stirring the mixed powder at a temperature of 10 °C or lower to form a powder for a dry electrode.

In some non-limiting embodiments, the stirring of the preliminary powder may be performed at a temperature of 45 °C or higher.

In some non-limiting embodiments, the stirring of the mixed powder may be performed at a temperature of 5 °C or lower.

A powder for a dry electrode according to some non-limiting embodiments may have a dynamic angle of repose in a predetermined numerical range. Accordingly, reliability and process control properties of a dry electrode manufacturing process may be improved. In some non-limiting embodiments, a dry electrode sheet prepared using the powder for a dry electrode may have improved thickness uniformity.

A secondary battery comprising the dry electrode prepared using the powder according to some non-limiting embodiments of the present disclosure may be widely applied in green technology fields such as an electric vehicle, a battery charging station, a solar power generation, a wind power generation, etc., using a battery, etc. The secondary battery according to the present disclosure may be used for eco-friendly electric vehicles and/or hybrid vehicles to prevent climate change by suppressing air pollution and/or greenhouse gas emissions, etc.

### BRIEF DESCRIPTION OF THE DRAWINGS

FIG. 1 is a schematic perspective view of a cylindrical drum for measuring a dynamic angle of repose according to some non-limiting embodiments.
FIG. 2 is a side view schematically illustrating a shape of a powder for a dry electrode at an interior of a drum when a cylindrical drum rotates according to some non-limiting embodiments.
FIGS. 3 and 4 are diagrams schematically illustrating a method for measuring the dynamic angle of repose according to some non-limiting embodiments.
FIG. 5 is a process flow diagram for describing a method for preparing a powder for a dry electrode according to some non-limiting embodiments.
FIG. 6 is a schematic plan view illustrating a secondary battery according to some non-limiting embodiments.
FIG. 7 is a schematic cross-sectional view illustrating a secondary battery according to some non-limiting embodiments.

### DETAILED DESCRIPTION

No aspect, component, element, structure, act, step, function, instruction, and/or the like used herein should be construed as critical or essential unless explicitly described as such. The singular form of the term used herein may be intended to also include a plural form, unless otherwise indicated. As used herein, the singular form of "a", "an", and "the" include plural referents unless the context clearly states otherwise.

For the purposes of this disclosure, unless otherwise indicated, all numbers expressing quantities of ingredients, reaction conditions, dimensions, physical characteristics, and so forth used in the disclosure are to be understood as being modified in all instances by the term "about." Unless indicated to the contrary, the numerical parameters set forth in the present disclosure are approximations that can vary depending upon the desired properties sought to be obtained by the present disclosure.

The numerical ranges used in the present specification include all values within the ranges including the lower limit and the upper limit, increments logically derived from the form and spanning of a defined range, all double limited values, and all possible combinations of the upper limit and the lower limit of the numerical range defined in different forms. Unless otherwise defined in the present disclosure, values which may be outside of a numerical range due to experimental error or rounding of a value are also included in the defined numerical range.

Also, it should be understood that any numerical range recited herein is intended to include all sub-ranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g., 1 to 6.3, or 5.5 to 10, or 2.7 to 6.1.

The term "comprise" mentioned in the present specification is an open-ended description having a meaning equivalent to the term such as "is/are provided", "include", "contain", "have", or "is/are characterized", and does not exclude elements, materials, or processes which are not further listed.

According to some non-limiting embodiments of the present disclosure, a powder for a dry electrode having a predetermined dynamic angle of repose is provided. Additionally, according to some non-limiting embodiments of the present disclosure, a dry electrode sheet for a secondary battery (hereinafter, that may be abbreviated as a dry electrode sheet), an electrode for a secondary battery (hereinafter abbreviated as an electrode), and a secondary battery comprising the powder for a dry electrode are provided.

The powder for a dry electrode according to some non-limiting embodiments of the present disclosure comprises an electrode active material, a binder and a conductive material, wherein a dynamic angle of repose of the powder measured at 30 rpm is in a range from 15° to 30°.

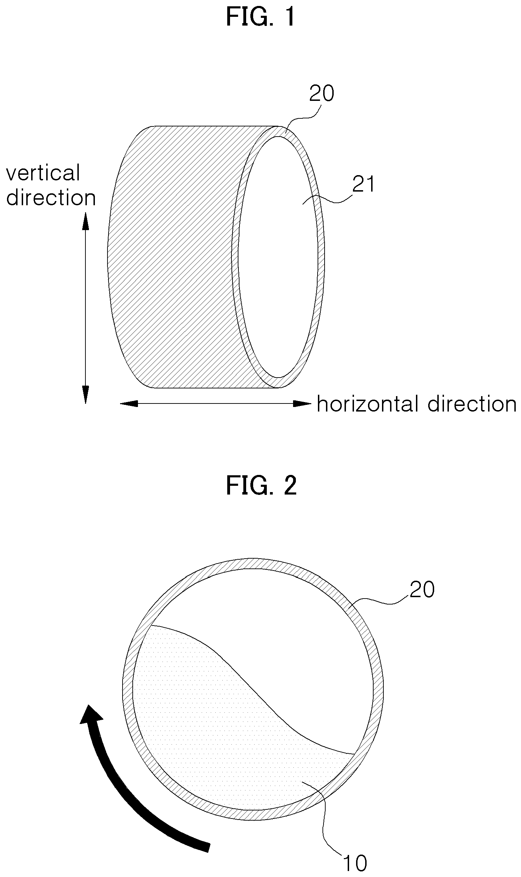

FIG. 1 is a schematic perspective view of a cylindrical drum 20 for measuring a dynamic angle of repose according to some non-limiting embodiments. FIG. 2 is a schematic side view schematically illustrating a shape of a powder for a dry electrode at an interior of a drum when a cylindrical drum rotates according to some non-limiting embodiments.

In FIG. 1, a vertical direction may be a direction parallel to a direction in which gravity acts, and a horizontal direction may be a direction parallel to a rotation axis of the cylindrical drum 20 within a horizontal plane orthogonal to the vertical direction.

As illustrated in FIG. 2, the shape of a powder for a dry electrode 10 may be observed through a transparent window 21 provided at a circular bottom surface of the cylindrical drum 20 in the horizontal direction while inputting the powder for a dry electrode 10 into an inside of the cylindrical drum 20 and rotating.

In some non-limiting embodiments, the dynamic angle of repose may be measured by placing the powder for a dry electrode 10 into the cylindrical drum 20 and rotating the cylindrical drum 20.

For example, the dynamic angle of repose may be calculated by placing the powder for a dry electrode into the interior of a cylindrical drum having a circular base in a horizontal position, and measuring an angle which a top surface of the powder 10 within the cylindrical drum 20 forms with a circular side surface of the interior of the cylindrical drum while rotating the cylindrical drum 20 at a predetermined rpm.

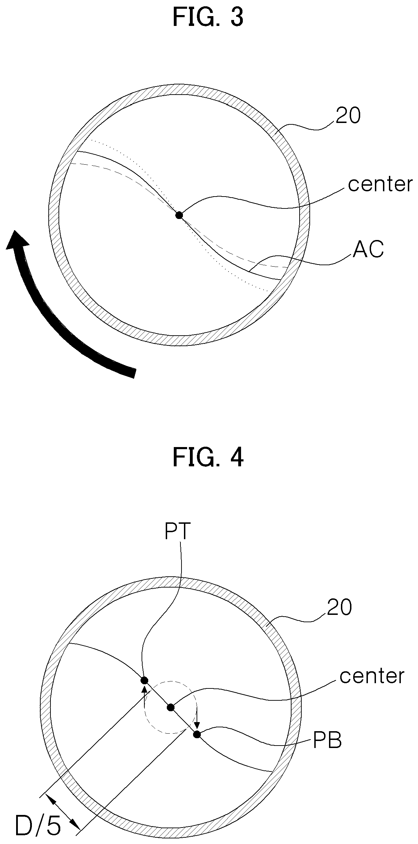

FIGS. 3 and 4 schematically illustrate a method of measuring the dynamic angle of repose while the powder for a dry electrode is placed inside of the cylindrical drum 20 and rotating the powder according to some non-limiting embodiments.

A method of calculating the dynamic angle of repose of the powder according to some non-limiting embodiments will be described with reference to FIGS. 3 and 4.

As illustrated in FIG. 3, when the powder for a dry electrode 10 is placed into the cylindrical drum 20 and the drum is rotated, the top surface of the powder for a dry electrode forms an incline due to the inter-particle frictional force within the powder for a dry electrode 10. As the cylindrical drum 20 rotates, the inclination angle of the top surface of the powder for a dry electrode 10 may repeatedly increase and decrease (as indicated by the dotted lines in FIG. 3). An average central line AC may be obtained by an average of the inclination angles of the top surface (indicated by the solid line AC in FIG. 3). For example, a center of the average central line AC may substantially coincide with a center of the circular bottom surface of the cylindrical drum 20.

As illustrated in FIG. 4, a virtual circle having a diameter equal to 1/5 of an inner diameter D of the cylindrical drum 20 based on the center of the average central line AC may be set. A first point PT may be determined where a tangential line at one end of a diameter of the virtual circle in a direction perpendicular to the vertical and horizontal directions (e.g., a left end in FIG. 4) meets the average central line AC, and a second point PB may be determined where a tangential line at the other end of the diameter of the circle (e.g., a right end in FIG. 4) meets the average central line AC. The smallest angle among angles formed by a straight line connecting the first point PT and the second point PB and the horizontal plane perpendicular to the vertical direction may be determined as the dynamic angle of repose of the powder.

The dynamic angle of repose of the powder can be measured for the powder for a dry electrode using a GranuDrum measuring system (manufactured by Granutools) according to a standard test method defined by ASTM D8648-25.

According to some non-limiting embodiments of the present disclosure, the dynamic angle of repose of the powder for a dry electrode 10 measured at 30 rpm is in a range from 15° to 30°. Within the above range of the dynamic angle of repose, flowability of the powder for a dry electrode 10 may be controlled. Accordingly, reliability and/or control properties may be improved during processes such as mixing, calendering, etc., while manufacturing the dry electrode. Also, a variation in a thickness of the dry electrode sheet may be reduced, and/or the occurrence of defects at a surface of the electrode sheet may be suppressed.

In some non-limiting embodiments, the dynamic angle of repose of the powder 10 for a dry electrode 10 measured at 30 rpm may be in a range from 17° to 30°, from 17° to 25°, 17° to 22°, from 18° to 22°, or from 19° to 22°. Within the above range, process properties may be further improved, and/or the variation in the thickness of the dry electrode sheet may be suppressed more effectively.

In some non-limiting embodiments, the dynamic angle of repose of the powder for a dry electrode 10 measured at 60 rpm may be in a range from 5° to 15°, from 6° to 14°, from 7° to 13°, or from 8° to 13°. Within the above range, flowability of the powder may be controlled more effectively, and/or the variation in the thickness of the dry electrode sheet may be further reduced.

In some non-limiting embodiments, a ratio of the dynamic angle of repose of the powder measured at 60 rpm to the dynamic angle of repose measured at 30 rpm of the powder for a dry electrode 10 may be 1/2 or less. In this range, flowability of the powder for a dry electrodes 10 may be further suppressed. Also, reliability of the dry electrode manufacturing process may be further improved, and/or the variation in the thickness of the dry electrode sheet may be further reduced.

In some non-limiting embodiments, the electrode active material comprised in the powder for a dry electrode 10 may comprise a cathode active material or an anode active material. For example, if the electrode active material comprises the cathode active material, the electrode sheet comprising the electrode active material may be provided as a cathode active material layer. The electrode comprising the electrode active material may be provided as a cathode.

For example, if the electrode active material comprises an anode active material, the electrode sheet comprising the anode active material may be provided as an anode active material layer. The electrode comprising the anode active material may be provided as an anode.

In some non-limiting embodiments, the cathode active material may comprise a lithium metal oxide. For example, the lithium metal oxide may comprise at least one of lithium manganese oxide, lithium iron phosphate (LiFePO₄), a lithium metal oxide comprising nickel, or any mixture thereof.

In some non-limiting embodiments, the lithium metal oxide may further comprise at least one of manganese (Mn), cobalt (Co), or any mixture thereof.

In some non-limiting embodiments, a content of nickel in the lithium metal oxide may be 50 mol% or more based on total moles of elements excluding lithium and oxygen. In some non-limiting embodiments, the content of nickel in the lithium metal oxide may be in a range from 50 mol% to 95 mol%, from 60 mol% to 95 mol%, from 70 mol% to 95 mol%, from 80 mol% to 95 mol%, or from 90 mol% to 95 mol% based on the total moles of elements excluding lithium and oxygen.

In some non-limiting embodiments, the lithium metal oxide may comprise a nickel-cobalt-manganese (NCM)-based oxide. Among the total moles of nickel, cobalt, and manganese contained in the lithium metal oxide, the nickel content may be the highest; , e.g., the nickel content may be 60 mol% or more, 70 mol% or more, 80 mol% or more, or 90 mol% or more.

Nickel may be provided as a transition metal associated with the power output and capacity of the lithium secondary battery. Thus, in some non-limiting embodiments, a high-Ni composition may be employed in the cathode active material as described above, so that a high-capacity cathode and a high-capacity lithium secondary battery may be provided.

However, as the nickel content increases, long-term storage stability and life-span stability of the cathode or the secondary battery may be relatively reduced, and side reactions with an electrolyte solution may also increase. However, according to some non-limiting embodiments, life-span stability and/or capacity retention properties may be improved by inclusion of manganese, while maintaining electrical conductivity may be provided by inclusion of cobalt.

In some non-limiting embodiments, the lithium metal oxide may comprise a layered structure or a crystal structure represented by Chemical Formula A below.

[Chemical Formula A] LiₓNiₐM_{b}O_{2+z}

In Chemical Formula A, M may comprise at least one of Co, Mn and/or Al, and 0.9≤x≤1.2, 0.5≤a≤0.8, 0.2≤b≤0.5 and -0.5≤z≤0.1.

The chemical structure represented by Chemical Formula A represents the bonding relationship within the layered structure or the crystal structure of the cathode active material, and does not preclude the presence of other additional elements. For example, in Chemical Formula A, M may comprise Co and/or Mn, and Co and/or Mn may serve as main active element of the cathode active material together with Ni. Chemical Formula A is provided to express the bonding relationship of the main active elements, and is to be understood as a formula encompassing introduction and substitution of the additional elements.

In some non-limiting embodiments, an auxiliary element may be further comprised in addition to the main active elements to enhance chemical stability of the cathode active material or the layered/crystal structure. The auxiliary element may be incorporated in the layered structure/crystal structure to form a bond, and this case is to be understood as being comprised in the structure represented by Chemical Formula A.

For example, the auxiliary element may comprise at least one selected from, e.g., Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and/or Zr. The auxiliary element may act as an auxiliary active element such as Al which may contribute to capacity/power activity of the cathode active material together with Co and/or Mn.

In some non-limiting embodiments, for example, the lithium metal oxide may comprise a layered structure or a crystal structure represented by the following Chemical Formula A-1.

[Chemical Formula A-1] LiₓNiₐM1_{b1}M2_{b2}O_{2+z}

In Chemical Formula A-1, M1 may comprise at least one of Co, Mn and/or Al, and M2 may comprise at least one of Na, Mg, Ca, Y, Ti, Hf, V, Nb, Ta, Cr, Mo, W, Fe, Cu, Ag, Zn, B, Ga, C, Si, Sn, Sr, Ba, Ra, P and/or Zr, and 0.9≤x≤1.2, 0.6≤a≤0.8, 0.2≤b1+b2≤0.4, and - 0.5≤z≤0.1.

In some non-limiting embodiments, the lithium manganese oxide may comprise one or more of a Mn-rich active material, an LLO (Li-rich layered oxide)/OLO (Over-Lithiated Oxide) active material, and a Co-less active material.

In some non-limiting embodiments, the lithium manganese oxide may be represented by Chemical Formula B.

[Chemical Formula B] p[Li₂MnO₃]·(1-p)[Li_{q}JO₂]

In Chemical Formula B, 0<p<1 and 0.9≤q≤1.2, and J may comprise at least one element selected from Mn, Ni, Co, Fe, Cr, V, Cu, Zn, Ti, Al, Mg, and/or B.

In some non-limiting embodiments, the lithium manganese oxide may comprise an over-lithiated nickel-cobalt-manganese (NCM) lithium oxide. For example, the lithium manganese oxide may comprise an NCM lithium oxide in which a molar ratio of lithium among metals excluding oxygen is 1.1 or higher.

In some non-limiting embodiments, a content of manganese in the over-lithiated NCM lithium oxide (e.g., mol% of manganese based on a total moles of nickel, cobalt and manganese) may be 50 mol% or higher, 55 mol% or higher, 60 mol% or higher, or 65 mol% or higher.

In some non-limiting embodiments, the content of manganese in the over-lithiated NCM-based lithium oxide may be in a range from 50 mol% to 90 mol%, from 55 mol% to 85 mol%, from 57 mol% to 82 mol%, from 60 mol% to 80 mol%, or from 65 mol% to 75 mol%.

In some non-limiting embodiments, the lithium metal oxide may further comprise a doping element. For example, elements substantially the same as or similar to the aforementioned auxiliary elements may be used as the doping element. For example, the aforementioned elements may be used alone or in a combination of two or more therefrom may be used as the doping element.

In some non-limiting embodiments, a material capable of adsorbing and desorbing lithium ions may be used as an anode active material. For example, the anode active material may comprise at least one of a carbon-based active material, such as a crystalline carbon, an amorphous carbon, a carbon composite, carbon fiber, etc.; and/or a silicon (Si)-based active material.

The "carbon-based active material" as used herein may refer to an active material containing carbon elements and does not contain silicon elements.

The "silicon-based active material" as used herein may refer to an active material containing silicon elements.

Non-limiting examples of the amorphous carbon comprise hard carbon, soft carbon, coke, a mesocarbon microbead (MCMB), and/or a mesophase pitch-based carbon fiber (MPCF), etc.

Non-limiting examples of the crystalline carbon comprise a graphite-based carbon such as natural graphite, artificial graphite, a graphitized coke, a graphitized MCMB, and/or a graphitized MPCF, etc.

The silicon-based active material may provide increased capacity properties. The silicon-based active material may comprise Si, SiOx (0<x<2), a silicon-carbon composite, a metal-doped silicate, and/or SiOx (0<x<2). For example, the metal may comprise lithium and/or magnesium.

In some non-limiting embodiments, the anode active material may comprise a lithium metal; a lithium alloy; and/or a tin (Sn)-containing material, etc.

In some non-limiting embodiments, the lithium metal may comprise a pure lithium metal and/or a lithium metal having a protective layer for inhibiting a dendrite growth, etc.

In some non-limiting embodiments, the elements comprised in the lithium alloy may comprise aluminum, zinc, bismuth, cadmium, antimony, silicon, lead, tin, gallium, and/or indium, etc.

In some non-limiting embodiments, a content of the electrode active material may be 92 wt% or more based on a total weight of the powder for a dry electrode 10. In some non-limiting embodiments, the content of the electrode active material may be in a range from 93 wt% to 99 wt%, from 94 wt% to 98 wt%, from 94.5 wt% to 97.5 wt%, or from 95 wt% to 97 wt% based on the total weight of the powder for a dry electrode 10. In the above range, electrical properties of the secondary battery may be maintained.

In some non-limiting embodiments, a binder comprised in the powder for a dry electrode may bind the materials comprised in the powder for a dry electrode. The binder may comprise a binder capable of being used in the cathode active material layer or in the anode active material layer.

In some non-limiting embodiments, the binder may comprise polytetrafluoroethylene (PTFE), polyethylene oxide, polyvinylpyrrolidone, polyvinyl alcohol, polyethylene, polyvinylidenefluoride (PVDF), a copolymer of vinylidenefluoride-hexafluoropropylene (poly(vinylidene fluoride-co-hexafluoropropylene)), polyacrylonitrile, polymethylmethacrylate, carboxymethyl cellulose (CMC), acrylonitrile butadiene rubber (NBR), styrene-butadiene rubber (SBR), polyacrylic acid, and/or poly(3,4-ethylenedioxythiophene) (PEDOT), etc.

In some non-limiting embodiments, the binder may comprise one or more of polytetrafluoroethylene, polyethylene, polyvinylidene fluoride, polyvinylidene fluoride-hexafluoropropylene copolymer, and/or carboxymethyl cellulose. In some non-limiting embodiments, the binder may penetrate uniformly between the electrode active materials, thereby improving uniformity of an electrode composition.

In some non-limiting embodiments, the binder may be capable of being fiberized by heat and/or a shear force. For example, the binder may be converted into a flexible fine fiber form by a predetermined heat and/or shear force, and the fine fiber may be evenly distributed between the electrode active materials to bind the electrode active materials. Accordingly, the electrode sheet having improved tensile strength may be provided.

In some non-limiting embodiments, the binder may comprise polytetrafluoroethylene. The electrode composition comprising the binder may have improved flowability and/or uniformity through high-shear.

In some non-limiting embodiments, a content of the binder may be 5 wt% or less based on the total weight of the powder for a dry electrode 10. In some non-limiting embodiments, the content of the binder may be in a range from 0.5 wt% to 5 wt%, from 0.8 wt% to 4 wt%, 1 wt% or more and less than 3 wt%, or from 1 wt% to 2 wt% based on the total weight of the powder for a dry electrode 10. Within the above range, flowability of the powder for a dry electrode 10 may be achieved, and/or reproducibility of the electrode sheet may be achieved without an additional process.

In some non-limiting embodiments, the powder for a dry electrode 10 may comprise a conductive material.

For example, the conductive material may comprise a carbon-based conductive material such as graphite, carbon black, acetylene black, ketjenblack, graphene, carbon nanotube, a VGCF (vapor-grown carbon fiber), and/or a carbon fiber, etc., and/or a metal-based conductive material comprising tin, tin oxide, titanium oxide, and/or a perovskite-based material such as LaSrCoO₃, LaSrMnO₃, etc.

In some non-limiting embodiments, the content of the conductive material may be in a range from 1 wt% to 5 wt%, from 1.5 wt% to 4.5 wt%, or from 2 wt% to 4 wt% based on the total weight of the powder for dry electrode 10. Within the above range, improved electrical properties of the secondary battery and/or flowability of the powder for a dry electrode 10 may be maintained.

According to some non-limiting embodiments of the present disclosure, a method for preparing a powder for a dry electrode is provided.

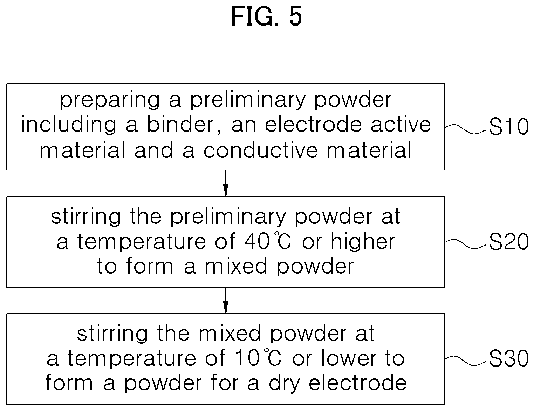

FIG. 5 is a process flow diagram for describing a method for preparing a powder for a dry electrode according to some non-limiting embodiments. Processes described with reference to FIG. 5 are provided as some non-limiting embodiments, and the powder for a dry electrode 10 is not limited as being prepared by examples of FIG. 5.

Referring to FIG. 5, a preliminary powder comprising a binder, an electrode active material, and a conductive material may be prepared (e.g., in a step of S10).

To avoid redundant descriptions, detailed descriptions of the binder, the electrode active material, and the conductive material are omitted.

In some non-limiting embodiments, the preliminary powder may be stirred at a temperature of 40 °C or higher to form a mixed powder (e.g., in a step of S20).

In some non-limiting embodiments, the powder for a dry electrode may be prepared by performing a stirring (shear) process at a low temperature after a stirring process at a relatively high temperature. When the preliminary powder is stirred, an internal temperature may be increased due to a friction between components of the powder. If the internal temperature excessively increases, the fiberization of the binder may proceed excessively to cause the powder of a lumpy dough-like consistency to form. The powder in the form of the lumpy dough may cause degradation of processability in subsequent processes and defects such as a pipe clog.

According to some non-limiting embodiments of the present disclosure, a secondary stirring process described below after stirring the preliminary powder at a temperature of 40 °C or higher may be performed at a relatively low temperature. Accordingly, the powder for a dry electrode having the aforementioned range of the dynamic angle of repose may be obtained. The powder for a dry electrode according to some non-limiting embodiments of the present disclosure may comprise a binder having a controlled fiberization, and reliability of the powder preparation process and the electrode sheet fabrication process may be improved. Further, the dry electrode sheet prepared from the powder for a dry electrode according to some non-limiting embodiments may have improved thickness uniformity, and/or defects at the surface of the electrode sheet may be suppressed.

In some non-limiting embodiments, if the preliminary powder is stirred at a temperature below 40 °C, the fiberization of the binder for forming the dry electrode sheet may not be sufficient, and the dry electrode sheet may not be easily formed.

In some non-limiting embodiments, the preliminary powder may be stirred at a temperature of 45°C or higher, or 50°C or higher. In this range, the fiberization of the binder for forming the dry electrode sheet may be sufficiently performed.

In some non-limiting embodiments, the preliminary powder may be stirred at a relatively high temperature for 30 minutes to 3 hours. For example, the preliminary powder may be stirred for 30 minutes to 2 hours, or for 30 minutes to 1.5 hours. In this range, the fiberization of the binder suitable for preparing the dry electrode sheet may be induced.

In some non-limiting embodiments, the mixed powder may be stirred at a temperature of 10°C or lower to form a powder for a dry electrode (e.g., in a step of S30).

In some non-limiting embodiments, the mixed powder obtained by stirring the preliminary powder at a temperature of 40°C or higher may be stirred at a relatively low temperature of 10°C or lower, so that the powder components may be uniformly mixed, and the excessive fiberization of the binder may be prevented. If the mixed powder is stirred at a temperature exceeding 10°C, the binder may become excessively fiberized, and the powder for a dry electrode may have the form of the lumpy dough.

In some non-limiting embodiments, the mixed powder may be stirred at a temperature of 5 °C or lower, or 3 °C or lower. In this range, sufficient mixing of the powder components may be performed while preventing the excessive fiberization of the binder, thereby implementing fabrication of the more uniform dry electrode sheet.

In some non-limiting embodiments, the mixed powder may be stirred at a relatively low temperature for 30 minutes to 3 hours. For example, the mixed powder may be stirred for 30 minutes to 2 hours, or from 30 minutes to 1.5 hours. In this range, sufficient mixing may be performed while preventing the excessive fiberization of the binder.

The powder of a dry electrode 10 according to some non-limiting embodiments may be pressurized to form the dry electrode sheet. For example, the dry electrode sheet may be obtained by a calendering process.

In some non-limiting embodiments, when the powder for a dry electrode 10 is pressurized to form the dry electrode sheet, a standard deviation of sheet thickness may be 3 µm or less, or 2 µm or less. The uniform dry electrode sheet may be manufactured in the above range.

According to some non-limiting embodiments of the present disclosure, a secondary battery is provided in which the dry electrode sheet prepared from the powder of a dry electrode is used as an electrode. The dry electrode sheet according to some non-limiting embodiments may be provided as an electrode active material layer, e.g., a cathode active material layer or an anode active material layer. In some non-limiting embodiments, the secondary battery may be a lithium secondary battery.

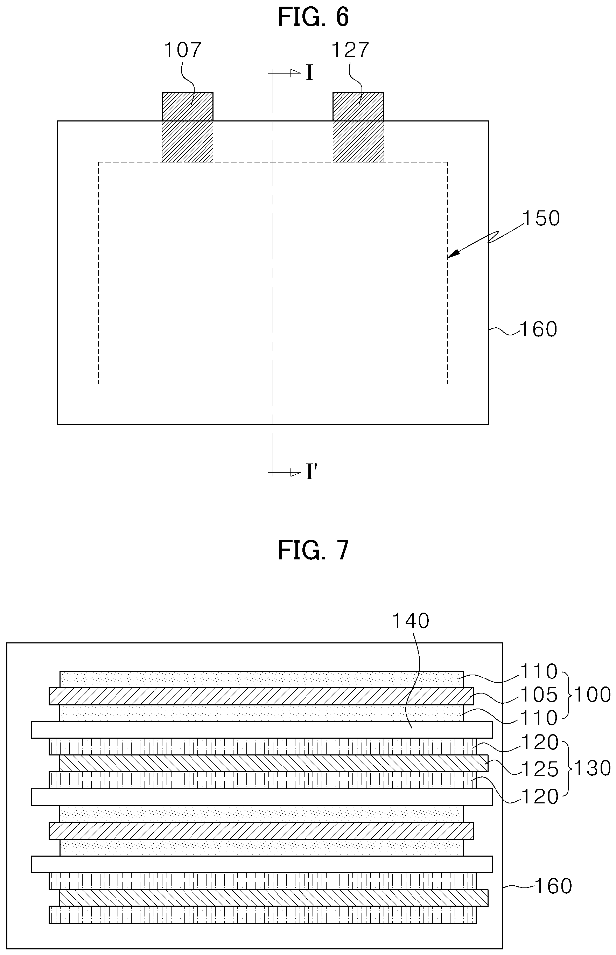

FIGS. 6 and 7 are a schematic plan view and a schematic cross-sectional view, respectively, illustrating a secondary battery according to some non-limiting embodiments. For example, FIG. 7 is a cross-sectional view taken along a line I-I' of FIG. 6 in a thickness direction of the secondary battery of FIG. 6.

Referring to FIGS. 6 and 7, the secondary battery may comprise an electrode assembly 150 and a case 160 accommodating the electrode assembly 150. The electrode assembly 150 may comprise a cathode 100, an anode 130 and a separator 140.

The cathode 100 may comprise a cathode current collector 105 and a cathode active material layer 110 formed on at least one surface of the cathode current collector 105. In some non-limiting embodiments, the above-described dry electrode sheet comprising the cathode active material as an active material may be used as the cathode active material layer 110.

In some non-limiting embodiments, the cathode active material layer 110 may be formed on both surfaces (e.g., an upper surface and a lower surface) of the cathode current collector 105. For example, the cathode active material layer 110 may be attached to each of the upper surface and the lower surface of the cathode current collector 105, and may be in direct contact with the surface of the cathode current collector 105.

In some non-limiting embodiments, the cathode current collector 105 may comprise, e.g., stainless steel, nickel, aluminum, titanium, and/or copper, or an alloy thereof. In some non-limiting embodiments, the cathode current collector 105 may comprise aluminum or an aluminum alloy.

In some non-limiting embodiments, an electrode density of the cathode 100 may be in a range from 3.0 g/cc to 3.9 g/cc, or from 3.2 g/cc to 3.8 g/cc.

The anode 130 may comprise an anode current collector 125 and an anode active material layer 120 formed on at least one surface of the anode current collector 125. In some non-limiting embodiments, the above-described dry electrode sheet comprising the anode active material may be used as the anode active material layer 120.

In some non-limiting embodiments, the anode active material layer 120 may be formed on both surfaces (e.g., an upper surface and a lower surface) of the anode current collector 125. The anode active material layer 120 may be attached to each of the upper surface and the lower surface of the cathode current collector 125, and may be in direct contact with the surface of the anode current collector 125.

In some non-limiting embodiments, the anode current collector 125 may comprise gold, stainless steel, nickel, aluminum, titanium, and/or copper, or an alloy thereof. In some non-limiting embodiments, the anode current collector 125 may comprise copper or a copper alloy.

In some non-limiting embodiments, a density of the anode active material layer 120 may be in a range from 1.4 g/cc to 1.9 g/cc.

In some non-limiting embodiments, an area and/or a volume of the anode 130 (e.g., a contact area with the separator 140) may be larger than that of the cathode 100. Accordingly, transfer of lithium ions generated may be promoted from the cathode 100 to the anode 130 without, e.g., precipitation to further improve output power and/or capacity properties.

The separator 140 may be interposed between the cathode 100 and the anode 130. In some non-limiting embodiments, the separator 140 may comprise a porous polymer film formed of a polyolefin-based polymer such as an ethylene homopolymer, a propylene homopolymer, an ethylene/butene copolymer, an ethylene/hexene copolymer, and/or an ethylene/methacrylate copolymer, or the like. In some non-limiting embodiments, the separator may comprise a nonwoven fabric formed of a glass fiber having a high melting point, a polyethylene terephthalate fiber, or the like. Combinations of porous polymer film(s) and non-woven fabric(s) may be used.

The separator 140 may extend between the cathode 100 and the anode 130, and may be folded and wound in the thickness direction of the secondary battery. Accordingly, a plurality of the cathodes 100 and the anodes 130 may be stacked in the thickness direction by the separator 140.

In some non-limiting embodiments, an electrode cell may be defined by the cathode 100, the anode 130 and the separator 140, and a plurality of the electrode cells may be stacked to form the electrode assembly 150 having, for example, a jelly roll shape. The electrode assembly 150 may be formed by winding, stacking, folding, or the like, of the separator 140.

In some non-limiting embodiments, the electrode assembly 150 may be accommodated in the case 160, and an electrolyte solution may be injected into the case 160. The case 160 may comprise, e.g., a pouch, a can, etc.

In some non-limiting embodiments, a non-aqueous electrolyte solution may be used as the electrolyte solution.

In some non-limiting embodiments, the non-aqueous electrolyte solution may comprise a lithium salt as an electrolyte, and an organic solvent. The lithium salt may be expressed as, e.g., Li⁺X⁻, and an anion (X-) of the lithium salt may comprise F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc. Mixtures of lithium salts may be used.

In some non-limiting embodiments, the organic solvent may comprise, e.g., propylene carbonate (PC), ethylene carbonate (EC), diethyl carbonate (DEC), dimethyl carbonate (DMC), ethylmethyl carbonate (EMC), methylpropyl carbonate, dimethyl sulfoxide (DMSO), acetonitrile, dimethoxyethane, diethoxyethane, vinylene carbonate, sulfolane, gamma-butyrolactone, propylene sulfite, and/or tetrahydrofuran, or the like. These may be used alone or in a combination of two or more therefrom.

As illustrated in FIG. 6, electrode tabs (a cathode tab and an anode tab) may protrude from a cathode current collector 105 and an anode current collector 125 comprised in each electrode cell to extend to one side of the case 160. The electrode tabs may be fused together with the one side portion of the case 160 to form an electrode lead (a cathode lead 107 and an anode lead 127) that may be extended or exposed to an outside of the case 160.

Although FIG. 6 illustrates that the cathode lead 107 and the anode lead 127 are formed at the same side of the secondary battery or the case 160, the cathode lead 107 and the anode lead 127 may be formed at opposite sides.

For example, the cathode lead 107 may be formed at one side of the case (160), and the anode lead 127 may be formed at the other side of the outer case 160.

For example, the secondary battery may be fabricated in a cylindrical type using a can, a prismatic type, a pouch type, or a coin type.

The above-described embodiments of the present disclosure include aspects as follows:
Aspect 1) A powder for a dry electrode, comprising an electrode active material, a binder, and a conductive material, wherein a dynamic angle of repose of the powder measured at 30 rpm is in a range from 15° to 30°.
Aspect 2) The powder for a dry electrode according to Aspect 1, wherein a dynamic angle of repose of the powder measured at 60 rpm is in a range from 5° to 15°.
Aspect 3) The powder for a dry electrode according to any one of Aspects 1 and 2, wherein a ratio of a dynamic angle of repose of the powder measured at 60 rpm to the dynamic angle of repose measured at 30 rpm is 1/2 or less.
Aspect 4) The powder for a dry electrode according to any one of Aspects 1 to 3, wherein a standard deviation of a thickness of an electrode sheet manufactured from the powder is 3 µm or less.
Aspect 5) The powder for a dry electrode according to any one of Aspects 1 to 4, wherein the dynamic angle of repose of the powder is calculated by placing the powder for a dry electrode into an interior of a cylindrical drum having a circular base in a horizontal position, and measuring an angle at which a top surface of the powder within the cylindrical drum forms with a circular side surface of the interior of the cylindrical drum while rotating the cylindrical drum at a predetermined rpm.
Aspect 6) The powder for a dry electrode according to any one of Aspects 1 to 5, wherein the electrode active material comprises a lithium metal oxide.
Aspect 7) The powder for a dry electrode according to any one of Aspects 1 to 5, wherein the electrode active material comprises at least one of a carbon-based active material and/or a silicon-based active material.
Aspect 8) The powder for a dry electrode according to any one of Aspects 1 to 7, wherein the binder comprises a material capable of being fiberized by heat and/or shear force.
Aspect 9) The powder for a dry electrode according to any one of Aspects 1 to 8, wherein the binder comprises at least one selected from the group consisting of polytetrafluoroethylene, polyethylene, polyvinylidene fluoride, polyvinylidene fluoride-hexafluoropropylene copolymer, carboxymethyl cellulose, and a mixture thereof.
Aspect 10) The powder for a dry electrode according to any one of Aspects 1 to 9, wherein the conductive material comprises at least one of a carbon-based conductive material, and/or a metal-based conductive material.
Aspect 11) A dry electrode sheet comprising the powder for a dry electrode of any one of Aspects 1 to 10.
Aspect 12) A secondary battery, comprising: a cathode comprising the dry electrode sheet of Aspect 11; and an anode opposing the cathode.
Aspect 13) A method for preparing a powder for a dry electrode, comprising: preparing a preliminary powder comprising a binder, an electrode active material, and a conductive material; stirring the preliminary powder at a temperature of 40 °C or higher to form a mixed powder; and stirring the mixed powder at a temperature of 10 °C or lower to form a powder for a dry electrode.
Aspect 14) The method of Aspect 13, wherein the stirring the preliminary powder comprises stirring the preliminary powder at a temperature of 45 °C or higher.
Aspect 15) The method of any one of Aspects 13 and 14, wherein the stirring the mixed powder comprises stirring the mixed powder at a temperature of 5 °C or lower.

### Examples and Comparative Examples

### Example 1-1: Preparation of powder for dry electrode (for anode)

96g of artificial graphite as an anode active material, 2g of PTFE as a binder, and 2g of a vapor-grown carbon fiber (VGCF) as a conductive material were mixed to prepare a preliminary powder.

The preliminary powder was stirred at 50 °C for 1 hour to form a mixed powder, and then the mixed powder was stirred at 5 °C for 1 hour to prepare a powder for a dry electrode.

### Example 1-2: Preparation of powder for dry electrode (for anode)

A powder for a dry electrode was prepared using the same method as that in Example 1-1, except that the mixed powder was mixed at 5 °C for 30 minutes.

### Example 2-1: Preparation of powder for dry electrode (for cathode)

A powder for a dry electrode was prepared using the same method as that in Example 1-1, except that 96 g of LiNi_{0.88}Co_{0.09}Mn_{0.03}O₂ was used as the cathode active material.

### Example 2-2: Preparation of powder for dry electrode (for cathode)

A powder for a dry electrode was prepared using the same method as that in Example 2-1, except that the mixed powder was mixed at 5 °C for 30 minutes.

### Comparative Example 1-1: Preparation of powder for dry electrode (for anode)

A powder for a dry electrode was prepared using the same method as that in Example 1-1, except that the preliminary powder was stirred only at 50 °C for 1 hour to prepare the powder for a dry electrode.

### Comparative Example 1-2: Preparation of powder for dry electrode (for anode)

A powder for a dry electrode was prepared using the same method as that in Example 1-1, except that the preliminary powder was stirred at 10 °C for 1 hour to prepare a mixed powder, and the mixed powder was stirred at 50 °C for 1 hour to prepare the powder for a dry electrode.

### Comparative Example 2-1: Preparation of powder for dry electrode (for cathode)

A powder for a dry electrode was prepared using the same method as that in Example 2-1, except that the preliminary powder was stirred only at 50 °C for 1 hour to prepare the powder for a dry electrode.

### Comparative Example 2-2: Preparation of powder for dry electrode (for cathode)

A powder for a dry electrode was prepared using the same method as that in Example 2-1, except that the preliminary powder was stirred at 10 °C for 1 hour to prepare a mixed powder, and the mixed powder was stirred at 50 °C for 1 hour to prepare a powder for a dry electrode.

### Experimental Example

### (1) Measurement of dynamic angle of repose

The dynamic angle of repose was measured for the powder for a dry electrode of each of Examples and Comparative Examples using a GranuDrum (manufactured by Granutools) according to a standard test method defined by ASTM D8648-25.

The measurement results are listed in Table 1 below.

**[Table 1]**

| rpm | anode | | | | |
|---|---|---|---|---|---|
| | active material | Comparative Example 1-1 | Comparative Example 1-2 | Example 1-1 | Example 1-2 |
| | dynamic angle of repose (°) | | | | |
| 30 | 14.68 | 36.78 | 45.11 | 21.19 | 28.49 |
| 60 | 13.31 | 30.43 | 35.13 | 8.93 | 14.67 |

| rpm | cathode | | | | |
|---|---|---|---|---|---|
| | active material | Comparative Example 2-1 | Comparative Example 2-2 | Example 2-1 | Example 2-2 |
| | dynamic angle of repose (°) | | | | |
| 30 | 14.89 | 43.61 | 45.62 | 19.74 | 29.48 |
| 60 | 11.21 | 35.18 | 33.81 | 12.57 | 14.96 |

Referring to Table 1 above, the dynamic angles of repose for the powder of Example 1-1 (30 rpm and 60 rpm, 21.19° and 8.93°, respectively) were each unexpectedly significantly lower than the dynamic angles of repose for the powder of Comparative Example 1-1 (30 rpm and 60 rpm, 36.78° and 30.43°, respectively). For Example 1-1, the preliminary powder was stirred at 50 °C for 1 hour to form a mixed powder, and then the mixed powder was stirred at 5 °C for 1 hour to prepare a powder for a dry electrode. In contrast, for Comparative Example 1-1, the preliminary powder was stirred only at 50 °C for 1 hour to prepare the powder for a dry electrode.

Similarly, the dynamic angles of repose for the powder of Example 1-2 (30 rpm and 60 rpm, 28.49° and 14.67°, respectively) were each unexpectedly significantly lower than the dynamic angles of repose for the powder of Comparative Example 1-2 (30 rpm and 60 rpm, 45.11° and 35.13°, respectively). For Example 1-2, the powder for a dry electrode was prepared using the same method as that in Example 1-1, except that the mixed powder was mixed at 5 °C for 30 minutes. In contrast, for Comparative Example 1-2, the preliminary powder for a dry electrode was prepared using the same method as that in Example 1-1, except that the preliminary powder was stirred at 10 °C for 1 hour to prepare a mixed powder, and the mixed powder was stirred at 50 °C for 1 hour to prepare the powder for a dry electrode.

Similar unexpectedly lower results were exhibited for the corresponding powders of Examples 2-1 and 2-2 compared to the powders of Comparative Examples 2-1 and 2-2, respectively.

### (2) Evaluation of dry electrode sheet

Dry electrode sheets were prepared by calendering the powders for a dry electrode of the Examples and Comparative Examples.

The dry electrode sheets were prepared 15 times for each powder for a dry electrode of Examples or Comparative Examples, and thicknesses of the prepared electrode sheets was measured, and an average and a standard deviation were also calculated.

The measurement results are listed in Table 2 below.

**[Table 2]**

| preparation number | anode (µm) | | | | cathode (µm) | | | |
|---|---|---|---|---|---|---|---|---|
| | Comparative Example 1-1 | Comparative Example 1-2 | Example 1-1 | Example 1-2 | Comparative Example 2-1 | Comparative Example 2-2 | Example 2-1 | Example 2-2 |
| 1 | 150 | 145 | 155 | 150 | 253 | 258 | 257 | 256 |
| 2 | 153 | 142 | 153 | 153 | 257 | 257 | 256 | 256 |
| 3 | 160 | 142 | 152 | 155 | 259 | 256 | 255 | 253 |
| 4 | 155 | 139 | 155 | 156 | 262 | 255 | 255 | 250 |
| 5 | 152 | 135 | 151 | 158 | 267 | 250 | 254 | 249 |
| 6 | 149 | 132 | 152 | 156 | 264 | 248 | 253 | 248 |
| 7 | 145 | 134 | 152 | 158 | 260 | 245 | 255 | 249 |
| 8 | 144 | 134 | 152 | 156 | 255 | 242 | 253 | 249 |
| 9 | 143 | 138 | 155 | 153 | 254 | 240 | 255 | 255 |
| 10 | 151 | 143 | 154 | 150 | 253 | 236 | 257 | 257 |
| 11 | 152 | 146 | 153 | 148 | 248 | 237 | 254 | 256 |
| 12 | 151 | 150 | 150 | 147 | 247 | 234 | 253 | 260 |
| 13 | 145 | 155 | 149 | 145 | 252 | 230 | 250 | 262 |
| 14 | 139 | 156 | 150 | 146 | 255 | 228 | 250 | 260 |
| 15 | 138 | 157 | 151 | 145 | 259 | 225 | 251 | 262 |
| min. | 138 | 132 | 149 | 145 | 247 | 225 | 250 | 248 |
| max. | 160 | 157 | 155 | 158 | 267 | 258 | 257 | 262 |
| average | 148.5 | 143.2 | 152.3 | 151.7 | 256.3 | 242.7 | 253.9 | 254.7 |
| standard deviation | 6.0 | 8.3 | 1.9 | 4.7 | 5.6 | 11.0 | 2.2 | 5.1 |

Referring to Table 2, the standard deviations of thickness of the dry electrode sheets manufactured using the powder for a dry electrode of Examples were unexpectedly significantly reduced compared to those from Comparative Examples. While not intending to be bound by any theory, it is believed that the corresponding reduction in the dynamic angle of repose may have improved the flowability, reliability and/or control properties of the powder during processes such as mixing, calendering, etc., while manufacturing the dry electrode, and accordingly the standard deviation in thickness of the dry electrode sheet was reduced for the Examples compared to the Comparative Examples.

## Claims

1. A powder for a dry electrode, comprising an electrode active material, a binder, and a conductive material,
wherein a dynamic angle of repose of the powder measured at 30 rpm is in a range from 15° to 30°.

2. The powder for a dry electrode according to claim 1, wherein a dynamic angle of repose of the powder measured at 60 rpm is in a range from 5° to 15°.

3. The powder for a dry electrode according to any one of claims 1 and 2, wherein a ratio of a dynamic angle of repose of the powder measured at 60 rpm to the dynamic angle of repose measured at 30 rpm is 1/2 or less.

4. The powder for a dry electrode according to any one of claims 1 to 3, wherein a standard deviation of a thickness of an electrode sheet manufactured from the powder is 3 µm or less.

5. The powder for a dry electrode according to any one of claims 1 to 4, wherein the dynamic angle of repose of the powder is calculated by placing the powder for a dry electrode into an interior of a cylindrical drum having a circular base in a horizontal position, and measuring an angle at which a top surface of the powder within the cylindrical drum forms with a circular side surface of the interior of the cylindrical drum while rotating the cylindrical drum at a predetermined rpm.

6. The powder for a dry electrode according to any one of claims 1 to 5, wherein the electrode active material comprises a lithium metal oxide.

7. The powder for a dry electrode according to any one of claims 1 to 5, wherein the electrode active material comprises at least one of a carbon-based active material and/or a silicon-based active material.

8. The powder for a dry electrode according to any one of claims 1 to 7, wherein the binder comprises a material capable of being fiberized by heat and/or shear force.

9. The powder for a dry electrode according to any one of claims 1 to 8, wherein the binder comprises at least one selected from the group consisting of polytetrafluoroethylene, polyethylene, polyvinylidene fluoride, polyvinylidene fluoride-hexafluoropropylene copolymer, carboxymethyl cellulose, and a mixture thereof.

10. The powder for a dry electrode according to any one of claims 1 to 9, wherein the conductive material comprises at least one of a carbon-based conductive material, and/or a metal-based conductive material.

11. A dry electrode sheet comprising the powder for a dry electrode of any one of claims 1 to 10.

12. A secondary battery, comprising:
a cathode comprising the dry electrode sheet of claim 11; and
an anode opposing the cathode.

13. A method for preparing a powder for a dry electrode, comprising:
preparing a preliminary powder comprising a binder, an electrode active material, and a conductive material;
stirring the preliminary powder at a temperature of 40 °C or higher to form a mixed powder; and
stirring the mixed powder at a temperature of 10 °C or lower to form a powder for a dry electrode.

14. The method of claim 13, wherein the stirring the preliminary powder comprises stirring the preliminary powder at a temperature of 45 °C or higher.

15. The method of any one of claims 13 and 14, wherein the stirring the mixed powder comprises stirring the mixed powder at a temperature of 5 °C or lower.
